(19) Europäisches Patentamt / European Patent Office / Office européen des brevets

(11) **EP 2 093 196 B1**

(12) **EUROPEAN PATENT SPECIFICATION**

(45) Date of publication and mention
of the grant of the patent:
**29.10.2014 Bulletin 2014/44**

(51) Int Cl.:
**C02F 3/32** (2006.01)

(21) Application number: **08151629.6**

(22) Date of filing: **19.02.2008**

(54) **Method for controlling a waste water treatment system using a multiple step constructed wetland**

Verfahren zur Steuerung einer Abwasserbehandlungsanlage mit einer mehrstufigen Pflanzenkläranlage

Procédé pour contrôler un système de traitement des eaux usées en utilisant un lagunage à plusieurs étages

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**26.08.2009 Bulletin 2009/35**

(73) Proprietors:
• **Meers, Erik**
**9572 Sint-Martens-Lierde (BE)**
• **Tolpe, Ivan**
**8480 Eernegem (BE)**

(72) Inventors:
• **Meers, Erik**
**9572 Sint-Martens-Lierde (BE)**
• **Tolpe, Ivan**
**8480 Eernegem (BE)**

(56) References cited:
WO-A1-02/43782       WO-A2-2005/035128
FR-A1- 2 795 398       KR-B1- 100 460 462
KR-B1- 100 460 463

• **BOJCEVSKA ET AL: "Impact of loads, season, and plant species on the performance of a tropical constructed wetland polishing effluent from sugar factory stabilization ponds" ECOLOGICAL ENGINEERING, ELSEVIER, vol. 29, no. 1, 22 December 2006 (2006-12-22), pages 66-76, XP005812403 ISSN: 0925-8574**
• **TOET S ET AL: "The functioning of a wetland system used for polishing effluent from a sewage treatment plant" ECOLOGICAL ENGINEERING, ELSEVIER, vol. 25, no. 1, 20 July 2005 (2005-07-20), pages 101-124, XP004943555 ISSN: 0925-8574**
• **RAN N ET AL: "A pilot study of constructed wetlands using duckweed (Lemna gibba L.) for treatment of domestic primary effluent in Israel" WATER RESEARCH, ELSEVIER, AMSTERDAM, NL, vol. 38, no. 9, 1 May 2004 (2004-05-01), pages 2240-2247, XP004508313 ISSN: 0043-1354**
• **WOOD ET AL: "Efficiency of reed beds in treating dairy wastewater" BIOSYSTEMS ENGINEERING, ACADEMIC PRESS, vol. 98, no. 4, 5 November 2007 (2007-11-05), pages 455-469, XP022357407 ISSN: 1537-5110**

EP 2 093 196 B1

**Description**

The invention relates to the area of waste water treatment, in particular "agricultural" waste waters, involving (pre-)conditioning of such waters and the subsequent use of so called constructed wetlands to achieve regulatory criteria for discharge in surface waters. The invention may very specifically be applied for handling liquid fractions resulting from a pre-separation and/or pre-treatment of manure, as a typical example of "agricultural" (/ animal breeding) waste waters.

A currently available and conventionally applied technology for handling manure involves several pre-separation and/or pre-treatment steps whereby

-   fresh manure is first physically separated into a liquid fraction and a solid fraction. This separation can be conventionally conducted using a sieve band press, centrifuge/decanter, a rotating drum filter, a chamber filter press, or similar separation technologies. The separation process can be further enhanced by adding coagulants and/or flocculants to the ingoing influent.
-   the solid fraction derived from this physical separation can be anaerobically digested with generation of biogas and production of renewable energy, or it can be co-composted with plant waste materials with the formation of a compost soil enhancer, or it can be incinerated.
-   the liquid fraction derived from this physical separation can be transferred to a biological reactor, in which it undergoes two subsequent sub-steps, either in the same container separated in time or in two separate containers. The first step is an aeration process in which aerobic microbial communities are stimulated to mineralize the present organic material and to convert the present nitrogen forms to nitrate-nitrogen (nitrification; $NO_3$-N). The second step is an anaerobic process, in which denitrifying bacteria convert the nitrate-nitrogen to nitrogen gas ($N_2$) which is then emitted into the atmosphere (de-nitrification).

Effluents resulting from such pre-treatment have been found to be still too rich in nitrogen (N), phosphorus (P), biological oxygen demand (BOD), chemical oxygen demand (COD) and suspended solids (SS) to be regarded as re-usable or dischargeable water. Therefore discharge of these effluents into surface water cannot occur without detrimental environmental effects. For instance, in Flanders (Belgium) criteria for discharge of treated wastewaters of this type into surface water are: 15 mg/l $N_{tot}$, 2 mg/l $P_{tot}$, 25 mg/l BOD, 125 mg/l COD, 35 mg/l SS. Effluents derived from manure processing as described above therefore require further processing to achieve these discharge criteria. A possible approach resides in the use of a multi-step constructed wetland technology, with percolation fields, (sub)surface flow fields, hydrophyte bassins and/or pleustophyte lagoons, to accomplish this goal.

The invention results from the new perception that sustainable waste water treatment using constructed wetlands is only possible provided that a proper input regulation / control is applied to the waste water streams supplied to the constructed wetland.

Although this "principle" may, with hindsight, appear "logic", it should be observed that no successful application in such direction was ever expressed in the state of the art.

It has thus been found that in order for the liquid fraction resulting from manure pre-processing to be able to be processed down to the stated criteria, the agricultural wastewater requires conditioning regarding one or more of the following three physico-chemical parameters: nitrogen, phosphorus and water,

as well as the optional conditioning of a fourth parameter, namely organic matter as expressed as COD (chemical oxygen demand) and/or BOD (biological oxygen demand).

-   First of all, **nitrogen** needs to be predominantly present in the form of nitrate ($NO_3$). This is either achieved by an aerobic microbial treatment (nitrification) as referred to above or a similar technology aimed to convert dominant nitrogen forms (mostly organic N or $NH_4$ in manure) into $NO_3$-N. After doing so, the constructed wetland system can purposely further stimulate de-nitrification processes, in the low range of nitrogen concentrations at which reactor processes become economically unfeasible.

-   Second, **phosphorus** must be removed down to the level that ingoing mass-flows of this element are in line with the annual plant uptake by the constructed wetland itself. Failing to do so, will result in excess phosphorus loading of the constructed wetland, which in turn will lead to phosphate accumulation and eventual saturation of the wetland system. When the substrate bed of the constructed wetland in time would become P-saturated, the entire system itself becomes a source of eutrophying contamination. For the constructed wetland to be able to perform adequately, a further step, in accordance with this invention, is required to condition the liquid fraction derived from manure processing operations. Phosphorus within the treatment process described here can be removed physico-chemically either by struvite (magnesium ammonium phosphate, MAP) under alkaline conditions or more appropriately by the addition of Fe/Al salts under slightly acidic conditions. This treatment is recommended to take place after the biological treatment (nitrification/de-nitrification) considering that both MAP formation as well as Fe/Al phosphates need inor-

ganic $PO_4^{3-}$ in solution in order to react and precipitate, implying the necessity for mineralization organic phosphorus compounds within the animal manure matrix.

- As a plant-based remediation system, the constructed wetland requires **water** to adequately sustain the plant-physiological processes. Due to the elevated salt concentrations in the liquid fraction of manure after separation (>20 mS/cm), the required plant-available water needs to be provided in function of the system's evapotranspiration rate. Failing to do so results in further salinification of the wastewater stream, which in turn results in reduced system performance related to osmotic stress. Water can either be externally added or be provided for by climatologic precipitation. In doing so, great care must be taken that the dosage of extra water added equals the amount evapotranspired by the system. Lower addition of water results in salinification, while over-dosage will result in dilution of your wastewater. As a dogma one can state that dilution of wastewater may not be used as a technique to achieve discharge criteria. As an engineering tool to determine required water amounts per surface area to be added, the Penman-Monheit equation can be employed as adopted and proposed by the The Food and Agriculture Organization of the United Nations (FAO, source FAO):

In the crop coefficient approach the crop evapotranspiration, $ET_c$, is calculated by multiplying the reference crop evapotranspiration, $ET_o$, by a crop coefficient, $K_c$:

$$ET_c = K_c \, ET_o$$

where : $ET_c$ crop evapotranspiration [mm $d^{-1}$],
$K_c$ crop coefficient [dimensionless],
$ET_o$ reference crop evapotranspiration [mm $d^{-1}$].

Most of the effects of the various weather conditions are incorporated into the $ET_o$ estimate. Therefore, as $ET_o$ represents an index of climatic demand, $K_c$ varies predominately with the specific crop characteristics and only to a limited extent with climate. This enables the transfer of standard values for $K_c$ between locations and between climates. This has been a primary reason for the global acceptance and usefulness of the crop coefficient approach and the $K_c$ factors developed in past studies.

The reference $ET_o$ is defined and calculated using the FAO Penman-Monteith equation. The crop coefficient, $K_c$, is basically the ratio of the crop $ET_c$ to the reference $ET_o$, and it represents an integration of the effects of four primary characteristics that distinguish the crop from reference grass.

From the original Penman-Monteith equation and the equations of the aerodynamic and canopy resistance, the FAO Penman-Monteith equation has been derived as follows:

$$ET_o = \frac{0.408\Delta(R_n - G) + \gamma \frac{900}{T + 273} u_2 (e_s - e_a)}{\Delta + \gamma(1 + 0.34 u_2)}$$

where

$ET_o$ reference evapotranspiration [mm $day^{-1}$],
$R_n$ net radiation at the crop surface [MJ $m^{-2}$ $day^{-1}$],
$G$ soil heat flux density [MJ $m^{-2}$ $day^{-1}$],
$T$ air temperature at 2 m height [°C],
$u_2$ wind speed at 2 m height [m $s^{-1}$],
$e_s$ saturation vapour pressure [kPa],
$e_a$ actual vapour pressure [kPa],
$e_s - e_a$ saturation vapour pressure deficit [kPa],
$D$ slope vapour pressure curve [kPa °$C^{-1}$],
$g$ psychrometric constant [kPa °$C^{-1}$].

The FAO Penman-Monteith equation determines the evapotranspiration from the hypothetical grass reference surface and provides a standard to which evapotranspiration in different periods of the year or in other regions can be compared and to which the evapotranspiration from other crops can be related.

This calculation results in an internationally standardized estimate of the potential evapotranspiration rate for each specific climatologic circumstance, based on meteorological variables. The actual crop evapotranspiration ($Et_c$) constructed wetlands need to be further corrected by a plant-species specific coefficient (Kc). The FAO assumes a Kc of 1.2 during the growing season and a Kc of 1.0 at the end and beginning of the growing season. According to several European studies, the Kc may be located between 1.0 and 2.0 during the growing season. For evaporation rates outside the growing season (when transpiration = zero), open lake evaporation measurements are employed to make the necessary calculations regarding water losses from the system.

- Microbiological processes generally require a carbon source to sustain their activities. In case of manure processing, this carbon source is already provided for by the organic matter within the manure. However, the most readily degradable fraction of this type of carbon-compounds has already been degraded and used up in the aerobic/anaerobic processes of the biological pre-treatment referred to above. Specific physico-chemical phosphorus removal, in accordance with the present invention, results in the co-precipitation of suspended solids and other organic compounds, further reducing the available degradable carbon source. Therefore, to compensate for this, an external input of carbon may be advisable to optimize the performance of the de-nitrification processes which continue in the constructed wetland. Addition of an external source of carbon can be performed either at the beginning of the constructed wetland, or between the preceding biological reactor and the constructed wetland, yet also at any intermediate point within the constructed wetland system itself.

The invention therefore provides a method for sustainably controlling a waste water treatment system using a multiple step constructed wetland comprising percolation fields, (sub) surface flow fields, hydrophyte basins and/or pleustophyte lagoons, which method comprises

- an input regulation of the nitrogen loading of waste water streams supplied to the constructed wetland, by conditioning the waste water streams supplied to the constructed wetland so that $C_N \times L_r \leq RC_N$, where $C_P$ is the nitrogen concentration of waste water streams supplied to the constructed wetland, $L_r$ is the waste water loading rate to the constructed wetland, per unit of surface area, and $RC_P$ is the nitrogen removal capacity of the constructed wetland, together with

- an input regulation of the phosphorus loading of waste water streams supplied to the constructed wetland, by conditioning the waste water streams supplied to the constructed wetland so that $C_P \times L_r \leq RC_P$, where $C_P$ is the phosphorus concentration of waste water streams supplied to the constructed wetland, $L_r$ is the waste water loading rate to the constructed wetland, per unit of surface area, and $RC_P$ is the phosphorus removal capacity of the constructed wetland, and

- an input regulation of the total amount of water supplied to the constructed wetland, by supplying additional water to the constructed wetland in function of evopatranspiration of water from the wetland system and/or of a measured meteorological water input to the constructed wetland, and

- an input regulation of the amount of (biodegradable) carbon of waste water streams supplied to the constructed wetland, by optionally supplying additional external carbon to the constructed wetland in function of a measured carbon content of the waste water streams

According to the invention, the method for controlling waste water treatment systems is applied to pre-processed nitrified agricultural waste waters in which nitrogen is predominantly present in the form of nitrate ($NO_3$), preferably at least 10 %, most preferably at least 40%.

The expression "agricultural" waste water as used in this context refers to any type of waste waters consisting of, or resulting from pre-separation / pre-treatment steps on, biomass polluted water streams from agricultural installations, animal breeding installations and/or food processing installations, including more in particular waste water streams resulting from pre-separation / pre-treatment operations on manure.

According to still another preferred feature of the invention, the method for controlling waste water treatment systems brings the nitrogen content value, the phosphorus content value, the biological oxygen demand value and/or the chemical oxygen demand value below criteria for discharge in surface water.

More in particular the method according to the invention brings nitrogen (N) content value below 15 mg/l $N_{tot}$, the phosphorus (P) content value below 2 mg/l $P_{tot}$, the biological oxygen demand (BOD) value below 25 mg/l, the chemical oxygen demand (COD) value below 125 mg/l, and suspended solids (SS) content value below 35 mg/l.

According to the invention, additional (biodegradable) carbon is supplied to the constructed wetland in the form of a carbohydrate containing waste water stream.

As stated, the method according to the invention requires an intermediate conditioning of the manure derived "agricultural" wastewater in order to allow the use of constructed wetland to achieve the tentative discharge values as referred to, in a prolonged sustainable manner (i.e. without P saturation within a given period of time). In order to remove phosphorus from the waste water, the effluent from the biological aerobic / anaerobic pre-treatment is introduced in a reaction vessel, to which a precipitating agent is added. This agent can for example (in a non-limiting way) consist of soluble Fe salts ($FeCl_3$, $FeClSO_4$,...) or similar Al, Mg or Ca products, as well as synthetic agents aimed to precipitate phosphorus and thereby remove them from solution. This reaction results in the formation of a P enriched sludge and a P poor supernatant fluid. The concentrations in the P poor supernatant fluid should most suitably be reduced to such extent that the mass added to the constructed wetland system, as calculated from the product between P concentrations and the loading rate of wastewater per unit of surface area, does not substantially exceed the P removal capacity of the constructed wetland per unit of surface area.

The resulting effluent is preferably introduced in a sediment trap basin, such as a sufficiently deep (2-5 m) lagoon without substrate placed at the bottom. This sediment trap allows prolonged slow sedimentation of suspended solids and "flocs" which have formed in the P-removal operation according to the invention but not yet separated from the supernatant fluid. This slow-sedimenting population of suspended solids still contains significant concentrations of phosphorus, which can easily be removed from the wastewater in this manner. The sludge which forms and gradually builds up at the bottom of the sediment trap is to be occasionally removed from the system. The feed to subsequent steps (basins) in the method according to the invention are taken from the top water layer of the sediment trap basin, as this contains the lowest concentrations of suspended solids and the lowest concentration of phosphorus. This transfer to subsequent basins can either be performed by an overflow or by a pump equipped with a floating input.

A conditioning vessel can be provided as next basin to allow centralized introduction of external water and external carbon source. However, this point of entry is merely optional and variations on the introduction of these external streams can easily be thought of. For added effect on denitrification, a "biofilm" carrier substrate (e.g. lava rock or locally available alternatives) can added at the bottom of this conditioning vessel.

The constructed wetlands themselves preferably consist of a combination of the following plant systems, at least comprising a plant system as listed under item 1 here below, and preferably also a plant system as listed under item 2 here below, and optionally further plant systems selected from those listed under items 3 and/or 4 here below :

1 - Flow fields: either subsurface flow or surface flow helophyte systems containing for instance *Phragmites australis, Scirpus sp., Typha sp., Calamus sp., Iris sp., Carex sp.* or a non-limitative list of emergent plant species able to grow in water lodged soil systems. The system itself is filled with a substrate in which the plant can be 'anchored'. The substrate is furthermore to be selected in view of sustaining / stimulating microbial activity, for example (yet not exclusively) lava rock. The selected plants transport oxygen and carbon to the root systems, there for creating an aerobic micro-cosmos in the direct vicinity of the rhizosphere, while anaerobic conditions prevail further in the substrate bed. The system therefore functions as a variation of aerobic / anaerobic microbial communities, mimicking at micro-scale the driving processes of the biological aerobic / anaerobic pre-treatment referred to above.

2 - Percolation fields: these consist of filter beds (predominantly coarse sand or substrates of similar granulometry) at the top of which wastewater is distributed. The wastewater subsequently percolates gravitationally through the filter bed, during which suspended solids are removed from the water. By imposing intermittent supply of these filter beds, the beds can be allowed to periodically dry up, thereby inducing more aerobic conditions. These more aerobic conditions in turn allow a quicker mineralization of organic solids which have been filtered out, also containing organic nitrogen. The filter beds are planted with emergent plant species, such as for example listed under item 1 here above, to further stimulate microbial activity. A second subtype of percolation field used within the system contains filtering material designed to purposely precipitate phosphorus from the wastewater stream upon passage. This subtype is preferably unplanted, allowing easy removal or regeneration of the filter material after saturation with phosphorus has occurred. This subtype of percolation field therefore serves as a phosphorus trap. Filter material in this context is preferably either rich in Ca, Mg, Fe, Al or a mixture of these.

3 - Hydrophyte bassins: these are open pond systems containing underwater vegetation. The underwater plants tend to enrich the water column with oxygen during photosynthesis, which in turn stimulates degradation of COD. Open pond systems also enjoy a higher hydrological capacity per unit of surface than both helophyte systems described above under item 1 and 2), increase the overall hydrological capacity of the system and therefore also the residence time.

4 - Pleustophyte lagoons: these are pond systems containing either floating plants (e.g. *Lemna minor*) or artificial floats containing helophytic plants. Pleustophyte lagoons function as buffers, augmenting the hydrological capacity of the overall system. In addition, some floating plants can be harvested throughout the growing season, rather than merely at the end of it as is the case for most other plant systems.

As a further control / management measure of the method according to the invention, plants produced in the constructed wetlands need to be harvested as much as feasibly possible to improve nutrient removal from the system by means of biomass export out of the system. Removal of the biomass creates an additional sink for phosphorus and nitrogen, metals, salts taken up and contained within this biomass. Alternatively, in some basins, plants can be allowed to die off and rot rather than being removed, to create an additional source of carbon to stimulate denitrifying processes.

Typically, this latter approach can be applied to helophyte flow fields (as referred to under item 1 here above).

Effluent coming out of the constructed wetlands can either be discharged, if in agreement with discharge criteria or can be used for other purposes. If concentrations of relevant parameters were to exceed criteria for discharge or re-use either re-circulation within the system can be selected or the implementation of additional treatment steps aimed at conditioning the effluent toward their end-use.

### Example of controlling a pilot installation in accordance with the invention

A pilot water treatment installation with constructed wetland ponds consisting of flow fields, percolation fields, hydrophyte basins and pleustophyte lagoons, as referred to here above, has been regulated / controlled in accordance with the invention at field scale since April 2006. Monitoring data on this this field scale demonstration will be published as Meers et al. (2008) in the peer reviewed international journal "Water, Air and Soil Pollution".

In this pilot-example, the system loading capacity has been dimensioned around nitrogen as a limiting, rate-determining parameter for introduction into the constructed wetland, because excess phosphorus is removed in a phosphorous removal operation in accordance with the invention, COD is generally removed at much greater rate and suspended solids are filtered out by the diverse filtering steps (by systems as described under item 1 here above), the last of which preferably occurs just before the point of discharge into the surface water. In this pilot-example, the loading rate of the wastewater stream supplied to the constructed wetland was in the range of 3000 - 6000 $kg.ha^{-1}.y^{-1}N$.

A sustainable regulation of the water treatment was achieved by (i) physical separation of the animal manure into a liquid and solid fraction, followed by (ii) an intensive aeration of the liquid fraction with or without addition of an external carbon source (e.g. methanol) resulting in active nitrification of the nitrogen present within the liquid organic suspension as well as of the mineralization of phosphorus into inorganic phosphate as well as the mineralization and removal of organic matter from the liquid fraction in the form of gaseous $CO_2$ emitted into the atmosphere, followed by (iii) denitrification under anaerobic non-aerated conditions with or without addition of an external carbon source (e.g. methanol) resulting in de-nitrification of the nitrate-nitrogen present within the liquid organic suspension and subsequent nitrogen loss from the system in the form of gaseous nitrogen gas ($N_2$) emissions into the atmosphere, followed by (iv) physico-chemical phosphorus removal by precipitation in the form of phosphate precipitates after addition of dosed Fe/Al salts to the suspension, followed by (v) phosphate sludge removal from the treated suspension, followed by (vi) optional addition of an external easily degradable carbon source in order to optimize prolonged denitrification of the residual nitrate-nitrogen present within the suspension, followed by (vii) water addition in function of the specific evapotranspiration ($ET_c$) of the constructed wetlands receiving this pre-treated wastewater and in function of climatological precipitation in the overall wetland system, followed by (viii) a cascade of various plant based treatment systems designed to treat the pre-conditioned wastewater down to criteria for discharge into surface water, followed by (ix) discharge into surface water.

Approximately 75-90% of phosphorus coming out of the biological aerobic / anaerobic pre-treatment reactor (tentative concentrations of 150-300 mg/l) was removed by a P-removal operation according to the invention, with only 10-25% proceeding into the constructed wetland.

The quality of the water stream coming out of the constructed wetland has was of the following quality nitrogen (N) content below 15 mg/l $N_{tot}$, the phosphorus (P) content below 2 mg/l $P_{tot}$, the biological oxygen demand (BOD) below 25 mg/l, the chemical oxygen demand (COD) below 125 mg/l, and suspended solids (SS) content value below 35 mg/l.

### Claims

1. Method for controlling a waste water treatment system for the treatment of the liquid fraction from animal manure pre-processing to achieve regulatory criteria for discharge in surface waters using a multiple step constructed wetland comprising percolation fields, sub surface flow fields, hydrophyte basins and/or pleustophyte lagoons, for bringing the nitrogen content value, the phosphorus content value, the biological oxygen demand value and/or the chemical oxygen demand value below criteria for discharge in surface water, **characterised in that** said method comprises a pre-treatment of the waste water stream consisting at least of nitrification, together with

   an input regulation of the phosphorus loading of waste water streams supplied to the constructed wetland, by conditioning the waste water streams supplied to the constructed wetland so that Cp x Lr $\leq$ RCp , where Cp is the phosphorus concentration of waste water streams supplied to the constructed wetland, Lr is the waste water loading rate to the constructed wetland, per unit of surface area, and RCp is the phosphorus removal capacity of the constructed wetland, and

   an input regulation of the total amount of water supplied to the constructed wetland, by supplying additional water to the constructed wetland in function of evapotranspiration of water from the wetland system and/or of a measured meteorological water input to the constructed wetland,

   together with an input regulation of the amount of biodegradable carbon of waste water streams supplied to the constructed wetland, by supplying additional external carbon to the constructed wetland in function of a measured carbon content of the waste water streams.

2. Method according to claim 1, **characterised in that** the method is applied TO PRE-TREATED AGRICULTURAL WASTE-WATER AS SPECIFIED UNDER CLAIM 1 in which nitrogen is predominantly present in the form of nitrate ($NO_3$)

3. Method according to claim 2, **characterised in that** the method is applied TO PRE-TREATED AGRICULTURAL WASTE-WATER AS SPECIFIED UNDER CLAIM 1 in which at least 10 % of the nitrogen, preferably at least 40% of the nitrogen, is present in the form of nitrate ($NO_3$).

4. Method according to any one of the preceding claims, **characterised in that** said method is applied TO PRE-TREATED AGRICULTURAL WASTE-WATER AS SPECIFIED UNDER CLAIM 1 having a nitrogen (N) content value ranging from 100 to 1000 mg/l $N_{tot}$, a phosphorus (P) content value ranging from 0 to 50 mg/l $P_{tot}$. a chemical oxygen demand (COD) value ranging from 200 to 5000 mg/l.

5. Method according to any one of the preceding claims, **characterised in that** said method brings the nitrogen content value, the phosphorus content value, the biological oxygen demand value and/or the chemical oxygen demand value below criteria for discharge in surface water.

6. Method according to claim 5, **characterised in that** the method brings the nitrogen (N) content value below 15 mg/l $N_{tot}$, the phosphorus (P) content value below 2 mg/l $P_{tot}$, the biological oxygen demand (BOD) value below 25 mg/l, the chemical oxygen demand (COD) value below 125 mg/l, and suspended solids (SS) content value below 35 mg/l.

7. Method according to any one of the preceding claims, **characterised in that** said method comprises an input regulation of the total amount of water supplied to the constructed wetland, by supplying additional water to the constructed wetland in function of the water content of the waste stream and/or of a measured meteorological water input to the constructed wetland, whereas the amount of additional water supplied to the constructed wetland is determined using the Penman-Monheit equation.

8. Method according to any one of the preceding claims, **characterised in that** said method comprises an input regulation of the amount of (biodegradable) carbon of waste water streams supplied to the constructed wetland, by supplying additional external carbon to the constructed wetland in function of a measured carbon content of the waste water streams, whereas said additional carbon is supplied in the form of one or more carbohydrate containing waste water stream(s).

9. Method according to any one of the preceding claims, **characterised in that** said method comprises maintaining a phosphorus balance where load into the system is at equilibrium with the exports from the system by means of discharge, plant removal and sludge removal.

10. Method according to any one of the preceding claims, **characterised in that** said method comprises maintaining a water household in which additional external water is supplied, by dimensioned climatological precipitation and/or by additional gift to the system in proportion to the water loss from the system by evapotranspiration.

**Patentansprüche**

1. Verfahren zur Steuerung eines Abwasserbehandlungssystems zur Behandlung vorbehandelter flüssiger Fraktionen tierischer Ausscheidungen, zur Einhaltung behördlicher Anforderungen beim Einleiten des Abwassers in Oberflächengewässer, mit Hilfe einer mehrstufigen Pflanzenkläranlage, bestehend aus Absetzbecken, (unter-) oberflächige Durchflussbecken, Pflanzenbecken (Hydrophyten und/oder Pleustophyten) zur Reduzierung des Stickstoffgehaltes, des Phosphorgehaltes, des biologischen Sauerstoffgehalt und/oder chemischen Sauerstoffgehalt unterhalb der Einleitkriterien für Oberflächengewässer, kennzeichnend für diese Methode ist, dass eine Vorbehandlung des Abwasserstroms erfolgt, die mindestens die Nitrifizierung zusammen mit einer Inputregulierung des Phosphorgehaltes im Abwasserstrom , der zur Pflanzenkläranlage zugeführt wird, beinhaltet, indem der Abwasserstrom aufbereitet zur Pflanzenkläranlage zugeführt wird, so dass
$C_p$ x $L_r \leq RC_p$ , wobei $C_p$ die Phosphorkonzentration im Abwasserstrom zur Pflanzenkläranlage darstellt, $L_r$ die zugeführte Abwasserladerate zur Pflanzenkläranlage, pro Oberflächeneinheit, darstellt und $RC_p$ die Phosphoreli-

minationsrate der Pflanzenkläranlage ist, und
eine Regulierung des Gesamtwasserzuflusses in der Pflanzenkläranlage besteht, indem zusätzliches Wasser zur Pflanzenkläranlage in Abhängigkeit des Evapotranspirationprozesses des Wassers aus dem Pflanzenkläranlagensystem und/oder durch einen messbaren meteorologischen Wasserzufluss erfolgt, zusammen mit eine Inputregulierung des (abbaubaren) Kohlenstoffes, die der Pflanzenkläranlage zugeführt wird, durch die Zugabe von externem Kohlenstoff zur Pflanzenkläranlage in Übereinstimmung zum messbaren Kohlenstoffgehaltes im Abwasser.

2. Verfahren im Sinne von Antrag 1, **gekennzeichnet dadurch, dass** diese Methode, die unter Antrag 1 festgelegt ist, auf vorbehandelte Abwässer aus der Landwirtschaft angewandt wird, wobei der Stickstoff vorwiegend in Form von Nitrat ($NO_3$) vorliegt.

3. Verfahren im Sinne von Antrag 2, **gekennzeichnet dadurch, dass** diese Methode, die unter Antrag 1 festgelegt ist, auf vorbehandelte Abwässer aus der Landwirtschaft angewandt wird, wobei mindestens 10% des Stickstoffs, vorzugsweise mindestens 40% des Stickstoffes in Form von Nitrat ($NO_3$) vorliegt.

4. Verfahren im Sinne einer der vorhergehenden Anträge, **gekennzeichnet dadurch, dass** das angewandte Verfahren auf vorbehandeltes Abwasser aus der Landwirtschaft, wie unter Verfahren 1 festgelegt, angewandt wird, einen Stickstoffgehalt (N) zwischen 100 und 1000 mg/l $N_{ges}$ vorweist, einen Phosphorgehalt zwischen 0 und 50 mg/l $P_{ges}$, einen chemischen Sauerstoffbedarf (CSB) zwischen 200 und 5000 mg/l vorweist.

5. Verfahren im Sinne einer der vorhergehenden Anträge, **gekennzeichnet dadurch, dass** das angewandte Verfahren den Stickstoffgehalt, den Phosphorgehalt, den biologischen Sauerstoffbedarf und/oder den chemischen Sauerstoffbedarf unter die Anforderungskriterien zur Einleitung des Abwassers in oberirdische Gewässer führt.

6. Verfahren im Sinne von Antrag 5, **gekennzeichnet dadurch, dass** das Verfahren den Stickstoffgehalt (N) unter 15 mg/l $N_{ges}$, den Phosphorgehalt (P) unter 2 mg/l $P_{ges}$, den biologischen Sauerstoffbedarf (BSB) unter 25 mg/l, den chemischen Sauerstoffbedarf (CSB) unter 125 mg/l und den Wert für Trockensubstanz (TS) unter 35 mg/L führt.

7. Verfahren im Sinne einer der vorhergehenden Anträge, **gekennzeichnet dadurch, dass** das angewandte Verfahren eine Regulierung des Gesamtwasserzuflusses in die Pflanzenkläranlage gewährleistet, indem zusätzliches Wasser zur Pflanzenkläranlage in Abhängigkeit zum Evapotranspirationprozess des Wassers aus dem Pflanzenkläranlagensystem und/oder durch einen messbaren meteorologischen Wasserzufluss erfolgt, wobei die Menge an zugeführtem Wasser nach der Penman-Monheit Gleichung berechnet wird.

8. Verfahren im Sinne einer der vorhergehenden Anträge, **gekennzeichnet dadurch, dass** das angewandte Verfahren eine Inputregulierung des (abbaubaren) Kohlenstoffes im Abwasser, welches zur Pflanzenkläranlage zugeführt wird, beinhaltet, durch zusätzliche Beigabe von externem Kohlenstoff zur Pflanzenkläranlage in Abhängigkeit zum gemessenen Kohlenstoffanteil im Abwasserstrom, wobei der zusätzliche Kohlenstoff aus Kohlenhydraten des/der Abwasserstrom/ströme zu beziehen ist.

9. Verfahren im Sinne einer der vorhergehenden Anträge, **gekennzeichnet dadurch, dass** das angewandte Verfahren eine Phosphorbilanz beibehält, in der die Fracht in das System im Gleichgewicht zum Export aus dem System, durch Abwasserableitung, Entzug über Pflanzen und Klärschlammentfernung, steht.

10. Verfahren im Sinne einer der vorhergehenden Anträge, **gekennzeichnet dadurch, dass** das angewandte Verfahren einen Wasserhaushalt gewährleistet, in dem zusätzlich externes Wasser zugeführt wird, durch klimatologische Niederschläge und/oder durch zusätzliche Beigabe ins System im Verhältnis zum Wasserverlust aus dem System durch Evapotranspiration.

**Revendications**

1. Méthode de régulation d'un système de traitement des eaux usées pour le prétraitement de la fraction liquide du fumier animal pour satisfaire aux critères imposés par la réglementation pour la décharge dans les eaux de surface en utilisant des lagunes artificielles à plusieurs étapes, comprenant des champs de percolation, des champs d'écoulement (sous)superficiel, des bassins hydrophyte et/ou des lagunes pleustophyte, dans le but d'amener les teneurs en azote, en phosphore, et la valeur de la demande biologique et/ou la valeur de la demande chimique en oxygène en dessous des critères pour la décharge dans les eaux de surface,

**caractérisé en ce que** ledit procédé comprend un prétraitement du courant des eaux usées avec au moins une nitrification, une régulation de la charge en phosphore du courant des eaux usées à l'entrée des lagunes artificielles en conditionnant le courant des eaux usées afin de satisfaire: $C_p \times L_r \leq RC_p$, avec $C_p$ la concentration en phosphore du courant en eau usée fourni aux lagunes artificielles, $L_r$ le débit de l'eau usée à l'entrée de la lagune et $RC_p$ la capacité d'élimination de phosphore de la lagune artificielle, et une régulation de la quantité totale des eaux fournies aux lagunes artificielles, en ajoutant de l'eau supplémentaire venant du système de lagunage et/ou par une quantité mesurée de l'eau météorologique,
ensemble avec une régulation à l'entrée de la quantité en carbone (biodégradable) du courant des eaux usée fournies aux lagunes artificielles, en suppléant aux lagunes artificielles du carbone artificiel supplémentaire en fonction de la teneur mesurée en carbone des eaux usées.

2. Procédé selon l'une quelconque des revendications précédentes, **caractérisé en ce que** ledit procédé est appliqué au prétraitement de l'eau usée agricole, comme spécifié dans revendication 1, dans laquelle l'azote est essentiellement présent sous forme de nitrate ($NO_3$).

3. Procédé selon l'une quelconque des revendications précédentes, **caractérisé en ce que** ledit procédé est appliqué au prétraitement des eaux usées agricoles, comme spécifié dans revendication 1, dans lesquelles au moins 10% de l'azote, de préférence au moins 40% de l'azote, est présent sous forme de nitrate ($NO_3$).

4. Procédé selon l'une quelconque des revendications précédentes, **caractérisé en ce que** ledit procédé est appliqué au prétraitement des eaux usées agricoles, comme spécifié dans revendication 1, avec une teneur en azote (N) entre 100 et 1000 mg/l $N_{tot}$, une teneur en phosphore (P) entre 0 et 50 mg/l $P_{tot}$ et une demande chimique en oxygène (DCO) entre 200 et 5000 mg/l.

5. Procédé selon l'une quelconque des revendications précédentes, **caractérisé en ce que** ledit procédé baisse la teneur en azote, la teneur en phosphore, la demande biologique en oxygène et/ou la demande chimique en oxygène en dessous des critères pour la décharge dans les eaux de surface.

6. Procédé selon la revendication 5, **caractérisé en ce que** ledit procédé baisse la teneur en azote (N) en dessous de 15 mg/l $N_{tot}$, la teneur en phosphore (P) en dessous de 2 mg/l $P_{tot}$, la demande biologique en oxygène (DBO) en dessous de 25 mg/l, la demande chimique en oxygène (DCO) en dessous de 125 mg/l, et la teneur des solides en suspension (SS) en dessous de 35 mg/l.

7. Procédé selon l'une quelconque des revendications précédentes, **caractérisé en ce que** ledit procédé comprend une régulation de la quantité totale d'eau fournie à l'entrée des lagunes artificielles, en ajoutant de l'eau supplémentaire en fonction de la quantité d'eau du courant des déchets et/ou de la quantité de l'eau mesurée des précipitations météorologiques dans les lagunes, en utilisant l'équation Penman-Monheit.

8. Procédé selon l'une quelconque des revendications précédentes, **caractérisé en ce que** ledit procédé comprend une régulation d'entrée de la quantité en carbone (biodégradable) des eaux usées fournies aux lagunes artificielles par addition aux lagunes artificielles, en fonction de la teneur en carbone mesurée dans les eaux usées, de carbone supplémentaire venant des eaux usées contenant un ou plusieurs carbohydrates.

9. Procédé selon l'une quelconque des revendications précédentes, **caractérisé en ce que** ledit procédé comprend le maintien d'un équilibre en phosphore dans lequel l'apport de phosphore dans le système est compensé par décharge, enlèvement de plantes et de boue.

10. Procédé selon l'une quelconque des revendications précédentes, **caractérisé en ce que** ledit procédé comprend la gestion d'un système aqueux dans lequel de l'eau supplémentaire venant de l'extérieur est ajoutée, par précipitation climatologique quantifiée et/ou par addition de l'eau au système en relation avec la perte d'eau par évapo-transpiration.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MEERS et al.** *Water, Air and Soil Pollution,* 2008